# EUROPÄISCHE PATENTSCHRIFT

(11) **EP 3 898 858 B1**
(45) Veröffentlichungstag und Bekanntmachung des Hinweises auf die Patenterteilung: **19.11.2025**
(21) Anmeldenummer: 19813592.3
(22) Anmeldetag: 10.12.2019
(51) Int. Cl.: C09D 183/04, C08G 77/00

(54) **VERWENDUNG VON ORGANOSILOXANEN MIT AROMATISCHEN RESTEN IN TRENNBESCHICHTUNGEN**
USE OF ORGANOSILOXANES WITH AROMATIC REMNANTS IN RELEASE COATINGS
UTILISATION D'ORGANOSILOXANES AYANT DES RESTES AROMATIQUES DANS DES REVÊTEMENTS ANTIADHÉSIFS

(30) Priorität: 19.12.2018 EP 18213853
(43) Veröffentlichungstag der Anmeldung: 27.10.2021
(73) Patentinhaber: Evonik Operations GmbH, 45128 Essen (DE)
(72) Erfinder: DÖHLER, Hardi, 45239 Essen (DE); KARABULUT, Irem, 45899 Gelsenkirchen (DE)
(74) Vertreter: Evonik Patent Association
(86) Internationale Anmeldenummer: PCT/EP2019/084374
(87) Internationale Veröffentlichungsnummer: WO 2020/126655

(56) Entgegenhaltungen:
- EP-B1- 1 276 825
- WO-A2-2013/108102
- JP-A- 2015 120 245
- JP-A- H09 137 128
- US-A- 5 460 863
- US-A1- 2004 054 115
- US-A1- 2018 057 716
- DATABASE WPI Week 201841, Derwent World Patents Index; AN 2018-409572, XP002792193
- "Silicones", 15 April 2003, ENCYCLOPEDIA OF POLYMER SCIENCE AND TECHNO, WILEY, US, PAGE(S) 765 - 841, XP007918236

## Beschreibung

Die vorliegende Erfindung betrifft die Verwendung eines Organosiloxans mit mindestens einem aromatischen Rest in Trennbeschichtungen; Zusammensetzungen, strahlenhärtende Beschichtungsmassen und Trennbeschichtungen, die dieses Organosiloxan enthalten; sowie ein Verfahren zur Herstellung einer Trennbeschichtung unter Verwendung dieses Organosiloxans. Das besagte Organosiloxan zeichnet sich dadurch aus, dass der mindestens eine aromatische Rest über einen nichtaromatischen organischen Rest an ein Siliziumatom gebunden ist.

Trennbeschichtungen (häufig auch als abhäsive Beschichtungen oder *Release Coatings* bezeichnet) sind aus dem Stand der Technik bekannt. Sie finden beispielsweise in Klebebändern oder Etikettenlaminaten Anwendung. Dabei wird in der Regel ein flächiger Träger, wie beispielsweise eine Kunststofffolie, Papier oder Pappe, mit einer Trennbeschichtung versehen. Im Vergleich zum unbeschichteten Träger weist der mit einer Trennbeschichtung versehende Träger eine verringerte Haftung gegenüber haftenden Materialen auf. Die Trennbeschichtungen, beziehungsweise die mit ihnen ausgerüsteten Träger, finden sich im täglichen Gebrauch häufig zum Schutz von klebrigen Oberflächen vor Verschmutzung oder unbeabsichtigtem Festkleben, wie bei Klebe-Etiketten, an Klebebändern, im Hygienebereich, bei medizinischen Pflastern, selbstklebenden Dekorations- und Schutzfolien, oder Backpapier. Trennbeschichtungen werden insbesondere bei flächigen Materialien, wie Papieren oder Folien, verwendet, um die Adhäsionsneigung von adhärierenden Produkten gegenüber diesen Oberflächen zu verringern.

Als besonders vorteilhaft haben sich Trennbeschichtungen aus Silikonmaterialien erwiesen. Die Trennbeschichtungen werden dabei aus einem oder mehreren Organosiloxanen durch Vernetzung hergestellt. Diese Vernetzung verläuft dabei häufig thermisch über eine Hydrosilylierungsreaktion zwischen einer hydrosilyl-funktionellen Verbindung und einer ethylenisch ungesättigten Verbindung in Gegenwart eines Katalysators bei höheren Temperaturen von in der Regel über 100 °C. Alternativ werden Trennbeschichtungen durch Vernetzung von Silikonen mit ethylenisch ungesättigten, radikalisch polymerisierbaren Gruppen durch Bestrahlung energiereicher Strahlung oder thermisch in Gegenwart von geeigneten Initiatoren oder Radikalstartern hergestellt. Die Vernetzung durch Bestrahlung findet insbesondere dann Anwendung, wenn das Trägermaterial wärmeempfindlich ist und eine thermische Aushärtung aus diesem Grund nicht geeignet ist. Dies ist insbesondere bei Kunststofffolien aus Polyethylen oder Polypropylen als flächige Träger der Fall, da die Erweichungstemperatur des Trägermaterials vergleichsweise niedrig ist.

Silikone, welche ethylenisch ungesättigte, radikalisch polymerisierbare Gruppen aufweisen, sind zum Beispiel (meth)acrylatmodifizierte Organosiloxane. (Meth)acrylatmodifizierte Organosiloxane sind in zahlreichen Patentschriften beschrieben, zum Beispiel in US6211322 und US4978726. Diese Organosiloxane können dreidimensional durch freie Radikale vernetzt werden und härten thermisch unter Zusatz von z. B. Peroxiden oder unter Einfluss energiereicher Strahlung, wie UV- oder Elektronenstrahlung, innerhalb kürzester Zeit zu mechanisch und chemisch widerstandsfähigen Schichten aus. Wird als Strahlungsquelle UV-Licht verwendet, erfolgt die Vernetzung vorzugsweise in Anwesenheit von Photoinitiatoren und/oder Photosensibilisatoren, wie beispielsweise Benzophenon, Benzoin, α-Hydroxyalkylphenon, Acylphosphinoxid oder ihren Derivaten. Übliche Photoinitiatoren werden beispielsweise beschrieben in "A Compilation of Photoinitiators Commercially available for UV today" (K. Dietliker, SITA Technology Ltd, London 2002*).*

Abhäsive Beschichtungen auf flächigen Trägern erfordern in vielen Anwendungen besonders niedrige Trennwerte, also ein besonders leichtes Ablösen von klebenden Massen. Diese Eigenschaft ist beispielsweise beim Ablösen des Gitters nach dem Etikettenstanzen und in automatischen Etikettenspendeanlagen wichtig. Diese Eigenschaft ist weiterhin wichtig, wenn die klebende Masse eine starke Adhäsion, jedoch eine geringe Kohäsion aufweist, wie zum Beispiel bei Bitumen oder Dichtungsmassen. Diese werden beispielsweise in der Dachabdichtung und zur Abdichtung in elektronischen Geräten eingesetzt.

(Meth)acrylatmodifizierte Organosiloxane können in ihrer Modifizierungsdichte über weite Bereiche hinweg unabhängig vom Molekulargewicht variiert werden. Wie in der WO2016096595 ausgeführt, weisen abhäsive Beschichtungen aus (meth)acrylatmodifizierten Organosiloxanen insbesondere dann niedrige Trennwerte auf, wenn die Siloxankette über einen hohen Silikoncharakter verfügt, der nicht durch organische Modifizierungen der Siloxankette gestört wird.

In der EP1276825 werden (meth)acrylatmodifizierte Organosiloxane mit extrem langer Silikonkette und sehr geringem Anteil reaktiver (Meth)acrylatgruppen vorgeschlagen. Solche (meth)acrylatmodifizierten Organosiloxane sind synthetisch schwer zugänglich und schlecht reproduzierbar. Der Anteil an vernetzbaren (Meth)acrylatgruppen ist derart gering, dass eine gute Härtung nicht gegeben ist. Es verbleiben nicht härtbare Bestandteile in der Trennbeschichtung. Dennoch sind die Trennwerte dieser Siloxane in vielen Anwendungsfällen nicht niedrig genug.

Die JP03052498 beschreibt die Verwendung von Phenyl-Methyl-Siloxanen in thermisch vernetzenden Siloxanen zur Verbesserung des Trennverhaltens gegen klebende Massen. Solche thermisch vernetzenden Siloxane sind seit den 1970er Jahren im Markt bekannt. Thermisch induzierte Reaktionen sind typischerweise katalysierte Anlagerungsreaktionen von SiH-Gruppen an vinylische oder endständige Doppelbindungen. Die in der JP03052498 beschriebenen Phenyl-Methyl-Siloxane bewirken in Silikonen, welche ethylenisch ungesättigte, radikalisch polymerisierbaren Gruppen, wie zum Beispiel (Meth)acrylatsäureestergruppen, enthalten und unter energiereicher Strahlung vernetzt werden, jedoch nicht die gewünschte Verbesserung des Trennwertes.

Phenyl-Methyl-Siloxane, also Organosiloxane bei denen Methyl- und Phenylgruppen direkt an Siliziumatome gebunden vorliegen, sind besonderes stabil gegen thermische Beanspruchung. Jedoch besteht die Gefahr, dass im Falle einer hohen oder langen Temperaturbelastung, insbesondere bei der Verbrennung, Benzol freigesetzt wird. Folien oder Papiere mit einer Silikontrennbeschichtung müssen nach ihrer Verwendung in der Regel als Abfall entsorgt werden, eine Wiederverwendung oder ein Recycling ist üblicherweise nicht angezeigt. Insbesondere silikonbeschichtete Papiere sind nicht für die Herstellung von recyceltem Papier geeignet, weil die Silikonschicht sich störend auf die Bedruckbarkeit des Papiers auswirkt. Silikonisierte Papiere, aber auch silikonisierte Folien, werden deshalb oft zur Energiegewinnung verbrannt, was zu einer Freisetzung von Benzol führen kann.

Daneben sind auch Silikonverbindungen bekannt, bei denen aromatische Reste am Siliziumatom nicht direkt, sondern über eine aliphatische Brücke angebunden sind. Beispielsweise offenbart die EP1640418 die Verwendung solcher Silikonverbindungen als Additiv zur Verbesserung der Oberflächenvergütung, Kratzbeständigkeit und des Abriebwiderstandes in thermoplastischen Elastomeren. Die Verwendung in Trennbeschichtungen und die daraus resultierenden vorteilhaften Eigenschaften werden dagegen im Stand der Technik nicht beschrieben.

Die Aufgabe der vorliegenden Erfindung war es, zumindest einen Nachteil des Standes der Technik zu überwinden.

Es bestand insbesondere die Aufgabe, verbesserte Trennbeschichtungen bereitzustellen. Vorzugsweise sollten Trennbeschichtungen bereitgestellt werden, die unter anderem aus Organosiloxanen, welche ethylenisch ungesättigte, radikalisch polymerisierbare Gruppen, wie zum Beispiel (Meth)acrylatsäureestergruppen, enthalten, durch Vernetzung unter energiereicher Strahlung hergestellt werden können. Diese Trennbeschichtungen sollten dabei vorzugsweise niedrige Trennwerte, also ein hervorragendes Trennverhalten gegen klebende Massen, ermöglichen und bei thermischer Belastung oder in Abbauprozessen eine möglichst geringe Abspaltung und Freisetzung von Benzol zeigen sowie ohne komplizierte und schwer zugängliche Synthesen auskommen.

Überraschenderweise wurde nun gefunden, dass die Verwendung eines Organosiloxans (I), das mindestens einen aromatischen Rest R^{(Aryl)} aufweist, der über einen nichtaromatischen organischen Rest Z an ein Siliziumatom gebunden ist, in Trennbeschichtungen diese Aufgabe löst.

Gelöst wird die Aufgabe der vorliegenden Erfindung daher durch die Gegenstände der unabhängigen Ansprüche. Vorteilhafte Ausgestaltungen der Erfindung sind in den nachgeordneten Ansprüchen, den Beispielen und der Beschreibung angegeben.

Die erfindungsgemäßen Gegenstände werden nachfolgend beispielhaft beschrieben, ohne dass die Erfindung auf diese beispielhaften Ausführungsformern beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei einem Druck von 101325 Pa (Normaldruck) und weiter bevorzugt zusätzlich bei einer relativen Luftfeuchtigkeit von 50%.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern nicht anders angegeben. Bereichsangaben schließen die Bereichsgrenzen X und Y also mit ein, sofern nicht anders angegeben.

Der Ausdruck "(meth)acryl" steht für "methacryl" und/oder "acryl".

Wo immer Moleküle beziehungsweise Molekülfragmente ein oder mehrere Stereozentren aufweisen oder aufgrund von Symmetrien in Isomere unterschieden werden können oder aufgrund anderer Effekte, wie zum Beispiel eingeschränkter Rotation, in Isomere unterschieden werden können, sind alle möglichen Isomere von der vorliegenden Erfindung mit eingeschlossen.

Die verschiedenen Fragmente in den nachfolgenden Formeln (la), (Ib), (II) und (III) können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinander folgen können.

Die nachfolgenden Formeln (la), (Ib), (II) und (III) beschreiben Verbindungen, die aus Wiederholungseinheiten aufgebaut sind, wie beispielsweise sich wiederholende Fragmente, Blöcke oder Monomereinheiten, und eine Molgewichtsverteilung aufweisen können. Die Häufigkeit der Wiederholungseinheiten wird durch Indizes angegeben. Die in den Formeln verwendeten Indizes, insbesondere sind als statistische Mittelwerte (Zahlenmittel) zu betrachten. Die verwendeten Indexzahlen sowie die Wertbereiche der angegebenen Indizes werden also Mittelwerte der möglichen statistischen Verteilung der tatsächlichen vorhandenen Strukturen und/oder deren Mischungen verstanden.

Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein erster Gegenstand der vorliegenden Erfindung ist deshalb die Verwendung von Zusammensetzungen enthaltend die Komponenten (I) und (II), wobei Komponente (I) mindestens ein Organosiloxan (I), das mindestens einen aromatischen Rest R^{(Aryl)} aufweist, der über einen nichtaromatischen organischen Rest Z an ein Siliziumatom gebunden ist, ist und Komponente (II) mindestens ein von Organosiloxan (I) unterschiedliches Organosiloxan (II) mit mindestens einer ethylenisch ungesättigten, radikalisch polymerisierbaren Gruppe ist, als strahlenhärtende Beschichtungsmassen, dadurch gekennzeichnet, dass die ausgehärtete Beschichtungsmasse eine Trennbeschichtung ist.

Die Komponente (II) besteht also aus einem oder mehreren Organosiloxanen (II), die sich von den Organosiloxanen (I) unterscheiden.

Die erfindungsgemäße Verwendung führt zu einer Verbesserung der Trennwirkung und/oder zu einer Verringerung der Benzolfreisetzung. Das Organosiloxan (I) wird also in Trennbeschichtungen als Mittel zur Verbesserung der Trennwirkung und/oder zur Verringerung der Benzolfreisetzung eingesetzt.

Ohne durch eine Theorie gebunden zu sein, wird angenommen, dass eine direkte oder unmittelbare Verknüpfung einer aromatischen Gruppe, wie beispielsweise einer Phenyl-Gruppe, an ein Siliziumatom die Freisetzung von Aromaten, wie beispielsweise Benzol, fördert, wohingegen eine indirekte oder mittelbare Verknüpfung dieser aromatischen Gruppe an ein Siliziumatom über einen nicharomatischen organischen Restes eine Freisetzung des entsprechenden Aromaten erschwert.

Unter einem Organosiloxan wird eine Verbindung verstanden, die an Siliziumatome gebundene organische Reste sowie Struktureinheiten der Formel =Si-O-Si= aufweist, wobei "=" für die drei verbleibenden Valenzen des betrachteten Siliziumatoms steht. Vorzugsweise handelt es sich bei den Organosiloxanen um Verbindungen, die aus Einheiten ausgewählt aus der Gruppe bestehend aus M = [R₃SiO_{1/2}], D = [R₂SiO_{2/2}], T = [R₃SiO_{2/2}] zusammengesetzt sind und optional zusätzlich Einheiten der Formel Q = [R₄SiO_{3/2}] aufweisen, wobei R für einen einwertigen organischen Rest steht. Die Reste R können dabei jeweils unabhängig voneinander gewählt werden und sind im paarweisen Vergleich gleich oder unterschiedlich.

Erfindungsgemäß weist das Organosiloxan (I) dabei einen nichtaromatischen organischen Rest Z auf, der direkt und unmittelbar an ein Siliziumatom gebunden ist, sowie mindestens einen aromatischen Rest R^{(Aryl)}, der wiederum direkt und unmittelbar an diesem nichtaromatischen organischen Rest Z gebunden ist.

Dieser nichtaromatische, organische Rest Z ist also ein z-wertiger Rest, an dem (z-1) Reste R^{(Aryl)} gebunden sind, mindestens aber ein Rest R^{(Aryl)} gebunden ist. Es gilt also z ≥ 2. Vorzugsweise ist z = 2 bis 4, weiter bevorzugt 2 bis 3, besonders bevorzugt 2. Der nichtaromatische organische Rest Z und der mindestens eine aromatische Rest R^{(Aryl)} bilden also zusammen einen einwertigen organischen Rest der Formel Z(R^{(Aryl)})_{(z-1)}, der im Folgenden auch mit (R^{(Aryl)})_{(z-1)}Z, -Z-(R^{(Aryl)})_{(z-1)} oder (R^{(Aryl)})_{(z-1)}-Z- bezeichnet wird. Der Rest Z(R^{(Aryl)})_{(z-1)} ist direkt und unmittelbar an einem Siliziumatom gebunden. Es liegen also Struktureinheiten der Form ≡Si-Z(R^{(Aryl)})_{(z-1)} vor, wobei "≡" für die verbleibenden drei Valenzen des Siliziumatoms steht. Ein Siliziumatom kann dabei 1, 2 oder 3 Reste Z(R^{(Aryl)})_{(z-1)} tragen, vorzugsweise 1 oder 2, besonders bevorzugt 1.

Vorzugsweise ist der nichtaromatische, organische Rest Z jeweils unabhängig voneinander ausgewählt aus der Gruppe bestehend aus zweiwertigen nichtaromatischen organischen Resten bestehend aus Kohlenstoff, Wasserstoff und optional Sauerstoff. Der nichtaromatische organische Rest Z weist dabei weiter bevorzugt 2 bis 130, noch weiter bevorzugt 2 bis 10, besonders bevorzugt 2 bis 3 Kohlenstoffatome auf.

Beispielsweise können die Reste Z jeweils unabhängig voneinander ausgewählt werden aus der Gruppe bestehend aus zweiwertigen aliphatischen Kohlenwasserstoffresten und zweiwertigen nichtaromatischen Polyetherresten.

Es ist bevorzugt, dass der aromatische Rest R^{(Aryl)} mindestens 6 bis 50, weiter bevorzugt 6 bis 12, noch weiter bevorzugt 6 bis 7, besonders bevorzugt 6 Kohlenstoffatome aufweist. Besonders bevorzugt handelt es sich bei dem Rest R^{(Aryl)} um einen Phenylrest.

Es ist weiterhin bevorzugt, dass das Organosiloxan (I) neben den nichtaromatischen organischen Resten Z und den aromatischen Resten R^{(Aryl)}, das heißt also neben den einwertigen organischen Resten der Formel Z(R^{(Aryl)})_{(z-1)}, zusätzlich noch weitere organische Reste aufweist, die jeweils unabhängig voneinander ausgewählt sind aus der Gruppe bestehend aus aliphatischen Kohlenwasserstoffresten, bevorzugt aliphatischen Kohlenwasserstoffresten mit 1 bis 20 Kohlenstoffatomen, weiter bevorzugt aliphatischen Kohlenwasserstoffresten mit 1 bis 10 Kohlenstoffatomen, besonders bevorzugt Methylresten (auch als "CH_{3"} oder "-CH₃" bezeichnet).

Es ist weiterhin bevorzugt, dass bis zu 98%, bevorzugt von 50% bis 97%, besonders bevorzugt 60% bis 95% der an den Siliziumatomen gebundenen organischen Reste des Organosiloxans (I) jeweils unabhängig voneinander ausgewählt sind aus aliphatischen Kohlenwasserstoffresten, bevorzugt mit 1 bis 20 Kohlenstoffatomen, weiter bevorzugt mit 1 bis 10 Kohlenstoffatomen, besonders bevorzugt CH₃.

Die Angabe, dass ein bestimmter Prozentsatz der Siliziumatome eines Organosiloxans in bestimmter Weise substituiert sind, bezieht sich auf den molaren Anteil aller Siliziumatome im numerischen statistischen Mittel aller Moleküle in der jeweiligen Komponente, falls nicht anders angegeben.

In einer bevorzugten Ausführungsform ist das Organosiloxan (I) ist dadurch gekennzeichnet, dass gilt:
- Z: ist jeweils unabhängig voneinander ausgewählt aus der Gruppe bestehend aus zweiwertigen aliphatischen Kohlenwasserstoffresten mit 2 bis 20, bevorzugt 2 bis 3, besonders bevorzugt 2 Kohlenstoffatomen;
- R^{(Aryl)}: ist jeweils unabhängig voneinander ausgewählt aus der Gruppe bestehend aus Resten gemäß der allgemeinen Formel 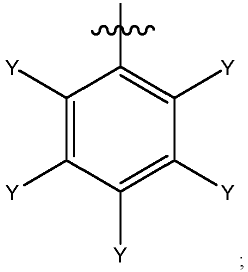
wobei gilt:
- Y: ist jeweils unabhängig voneinander ausgewählt aus der Gruppe bestehend aus H und einwertigen aliphatischen Kohlenwasserstoffresten mit 1 bis 20 Kohlenstoffatomen, bevorzugt H und/oder CH₃, besonders bevorzugt H.

Vorzugsweise gilt dabei:
- Z: ist jeweils unabhängig voneinander ausgewählt aus der Gruppe bestehend aus zweiwertigen Resten -(CₙH₂ₙ)- mit n = 2 bis 20, bevorzugt 2 bis 3, besonders bevorzugt 2; und
- Y: ist jeweils unabhängig voneinander ausgewählt aus der Gruppe bestehend aus einwertigen Resten -(C_{n'}H_{2n'+1}) mit n' = 0 bis 20, bevorzugt 0 und 1, besonders bevorzugt 0.

Besonders bevorzugt weist das Organosiloxan (I) mindestens einen Phenylrest auf, welcher über einen Rest -CH₂-CH₂- an ein Siliziumatom gebunden ist. Das bedeutet, dass besonders bevorzugt mindestens ein Phenylethylrest an ein Siliziumatom gebunden ist.

Es ist bevorzugt, dass die Reste R^{(Aryl)} über die Reste Z an mindestens 2%, bevorzugt 3% bis 50%, besonders bevorzugt 5% bis 40% der Siliziumatome des Organosiloxans (I) gebunden sind. Vorzugsweise umfassen von den an den Siliziumatomen des Organosiloxans (I) gebundenen organischen Resten mindestens 2%, bevorzugt 3% bis 50%, besonders bevorzugt 5% bis 40 % einen Rest R^{(Aryl)}. Es ist also bevorzugt, dass mindestens 2%, bevorzugt 3% bis 50%, besonders bevorzugt 5% bis 40% der Siliziumatome des Organosiloxans (I) einen Rest (R^{(Aryl)})_{(z-1)}Z aufweisen.

Es ist möglich, dass Reste R^{(Aryl)} über Reste Z an terminalen Siliziumatomen des Organosiloxans (I), also beispielsweise in α,ω-Position, gebunden sind. Es ist aber bevorzugt, dass Reste R^{(Aryl)} über Reste Z nicht an terminalen Siliziumatomen des Organosiloxans (I) gebunden sind, sondern an nichtterminalen Siliziumatomen des Organosiloxans (I) gebunden sind. Es ist also bevorzugt, dass Reste (R^{(Aryl)})_{(z-1)}Z nicht an terminalen Siliziumatomen gebunden vorliegen, sondern an nichtterminalen Siliziumatomen des Organosiloxans (I) gebunden sind. Weiter bevorzugt ist es, dass die Reste R^{(Aryl)} über die Reste Z ausschließlich an nichtterminalen Siliziumatomen des Organosiloxans (I) gebunden sind. Weiter bevorzugt ist es also, dass die Reste (R^{(Aryl)})_{(z-1)}Z ausschließlich an nichtterminalen Siliziumatomen des Organosiloxans (I) gebunden sind. Wie weiterhin bereits oben beschrieben, ist vorzugsweise z = 2 bis 4, weiter bevorzugt 2 bis 3, besonders bevorzugt 2.

Es ist weiterhing bevorzugt, dass das Organosiloxan (I) 10 bis 500, bevorzugt 15 bis 300, mehr bevorzugt 20 bis 200, besonders bevorzugt 30 bis 180 Siliziumatome aufweist.

In einer bevorzugten Ausführungsform ist das mindestens eine Organosiloxan (I) eine Verbindung der allgemeinen Formel (la):

Mₘ D_{d} Tₜ Q_{q} (la),

mit
- M: = [R'₃SiO_{1/2}];
- D: = [R'₂SiO_{2/2}];
- T: = [R'₃SiO_{2/2}];
- **Q**: = [R'₄SiO_{3/2}];
worin
- R': jeweils unabhängig voneinander ausgewählt ist aus der Gruppe bestehend aus R" und R‴; worin:
- R": jeweils unabhängig voneinander ausgewählt ist aus einwertigen organischen nichtaromatischen Resten, bevorzugt aliphatischen Kohlenwasserstoffresten mit 1 bis 20 Kohlenstoffatomen, besonders bevorzugt Methylgruppen;
- R‴: jeweils unabhängig voneinander ausgewählt ist aus einwertigen Resten der Formel (R^{(Aryl)})_{(z-1)}Z, wie oben definiert;
wobei gilt:
- m: = 2 bis (2+t+2*q);
- d: = 0 bis 600, bevorzugt 10 bis 350, besonders bevorzugt 15 bis 200;
- t: = 0 bis 50, bevorzugt 0 bis 5, besonders bevorzugt 0;
- q: = 0 bis 50; bevorzugt 0 bis 5; besonders bevorzugt 0;
mit der Maßgabe, dass das Organosiloxan (I) mindestens einen, bevorzugt 2 bis 200, besonders bevorzugt 3 bis 150 Reste R‴ aufweist.

Es ist bevorzugt, dass mindestens 2%, weiter bevorzugt 3% bis 50%, besonders bevorzugt 5% bis 40% der Reste R' ausgewählt sind aus der Gruppe bestehend aus Resten R‴.

Weiter bevorzugt ist das mindestens eine Organosiloxan (I) eine Verbindung der allgemeinen Formel (Ib):

M¹ₘ₁M²ₘ₂D¹_{d1}D²_{d2}T¹ₜ₁ (Ib);

mit
- M¹: = [R¹₃SiO_{1/2}];
- M²: = [R¹₂R²SiO_{1/2}];
- D¹: = [R¹R²SiO_{2/2}];
- D²: = [R¹R²SiO_{2/2}];
- T¹: = [R¹SiO_{3/2}];
worin
- R¹: jeweils unabhängig voneinander ausgewählt ist aus der Gruppe bestehend aus einwertigen aliphatischen Kohlenwasserstoffresten mit 1 bis 20 Kohlenstoffatomen, bevorzugt 1 bis 10 Kohlenstoffatomen, besonders bevorzugt Methylgruppen;
- R²: jeweils unabhängig voneinander ausgewählt ist aus der Gruppe bestehend aus Resten der Formel -[(OAlk)ₐ]_{b}-(O)ₖ₁-R⁽ⁱ⁾;
- R⁽ⁱ⁾: jeweils unabhängig voneinander ausgewählt ist aus der Gruppe bestehend aus H, einwertigen aliphatischen Kohlenwasserstoffresten mit 1 bis 20 Kohlenstoffatomen und Resten der Formel -(CH₂-CHR⁽ⁱⁱ⁾)_{c}-(O)ₖ₂-Ph(R⁽ⁱⁱⁱ⁾)_{f;}
- R⁽ⁱⁱ): jeweils unabhängig voneinander ausgewählt ist aus der Gruppe bestehend aus H und/oder CH₃;
- R⁽ⁱⁱⁱ): jeweils unabhängig voneinander ausgewählt ist aus der Gruppe bestehend aus C₁₋₂₀-Alkylresten, bevorzugt CH₃;
- Alk: jeweils unabhängig voneinander ausgewählt ist aus der Gruppe bestehend aus C₁₋₄-Alkylenresten;
- Ph: ein Phenylrest ist;
wobei gilt:
- m1: = 0 bis (2 + t1);
- m2: = 0 bis (2 + t1);
- d1: = 0 bis 500, bevorzugt 10 bis 300, besonders bevorzugt 15 bis 200;
- d2: = 0 bis 100, bevorzugt 0 bis 50; besonders bevorzugt 0;
- t1: = 0 bis 50, bevorzugt 0 bis 5; besonders bevorzugt 0;
- a: = 0 bis 30;
- b: = 0 oder 1;
- c: = 0 oder 1, wobei für c = 0 gilt: (k1 + k2) = 0 oder 1;
- f: = 0 bis 5, bevorzugt 0 bis 1; besonders bevorzugt 0;
- k1: = 0 oder 1;
- k2: = 0 oder 1;
- n: = 0 oder 1;
mit der Maßgabe, dass Organosiloxan (I) mindestens einen, bevorzugt 2 bis 200, besonders bevorzugt 3 bis 150 Reste der Formel -(CH₂-CHR⁽ⁱⁱ⁾)_{c}-(O)ₖ₂-Ph(R⁽ⁱⁱⁱ⁾)_{f} aufweist.

Die Einheiten -(CH₂-CHR⁽ⁱⁱ⁾)- können unterschiedlich an die benachbarten Gruppen oder Atome gebunden sein. In Formel (Ib) steht -(CH₂-CHR⁽ⁱⁱ⁾)-jeweils unabhängig voneinander für eine Gruppe der Form -(CH₂-CHR⁽ⁱⁱ))- und/oder der Form -(CHR⁽ⁱⁱ)-CH₂)-, vorzugsweise aber für eine Gruppe der Form -(CH₂-CHR⁽ⁱⁱ⁾)-.

Es ist bevorzugt, dass an mindestens 2%, bevorzugt 3% bis 50%, besonders bevorzugt 5% bis 40% der Siliziumatome des Organosiloxans (I) ein Rest R⁽ⁱ⁾ der allgemeinen Formel -(CH₂-CHR⁽ⁱⁱ⁾)ₕ-(O)ₘ-Ph(R⁽ⁱⁱⁱ⁾)_{f} gebunden ist.

Es ist weiterhin bevorzugt, dass der mindestens eine aromatische Rest R^{(Aryl)} und der nichtaromatische organische Rest Z des Organosiloxans (I) zusammen einen einwertigen Rest -(CH₂-CHR⁽ⁱⁱ))-Ph(CH₃)_{f} bilden, wobei R⁽ⁱⁱ) jeweils unabhängig voneinander ausgewählt ist aus H und/oder CH₃ und wobei f = 0 oder 1 ist. Es ist daher bevorzugt, dass die Reste Z(R^{(Aryl)})_{(z-1)} beziehungsweise die Reste R‴ in Formel (la) beziehungsweise die Reste R² in Formel (Ib) einwertige Reste der Formel -(CH₂-CHR⁽ⁱⁱ⁾)-Ph(CH₃)_{f} sind, wobei Ph ein Phenylrest ist und wobei R⁽ⁱⁱ) jeweils unabhängig ausgewählt aus H und/oder CH₃, bevorzugt H, ist und wobei f = 0 oder 1, bevorzugt 0 ist.

Es ist also bevorzugt, dass der mindestens eine aromatische Rest R^{(Aryl)} und der nichtaromatische organische Rest Z des Organosiloxans (I) zusammen einen einwertigen Rest jeweils unabhängig voneinander ausgewählt aus der Gruppe bestehend aus -(CH₂-CH(CH₃))-Ph(CH₃), -(CH₂-CH(CH₃))-Ph, -(CH₂-CH₂)-Ph(CH₃), -(CH₂-CH₂)-Ph, insbesondere bevorzugt -(CH₂-CH₂)-Ph bilden. Es ist daher besonders bevorzugt, dass die Reste Z(R^{(Aryl)})_{(z-1)} beziehungsweise die Reste R‴ in Formel (la) beziehungsweise die Reste R² in Formel (Ib) einwertige Reste jeweils unabhängig voneinander ausgewählt aus der Gruppe bestehend aus -(CH₂-CH(CH₃))-Ph(CH₃), -(CH₂-CH(CH₃))-Ph, -(CH₂-CH₂)-Ph(CH₃), -(CH₂-CH₂)-Ph, insbesondere bevorzugt -(CH₂-CH₂)-Ph sind. Es ist also besonders bevorzugt, dass für das Organosiloxan (I) gilt: -Z-(R^{(Aryl)})_{(z-1)}= R‴ = R² = -(CH₂-CH₂)-Ph.

Es ist weiterhin bevorzugt, dass die organischen Reste des Organosiloxans (I), die von Z(R^{(Aryl)})_{(z-1)} unterschiedlich sind, jeweils unabhängig voneinander ausgewählt sind aus der Gruppe bestehend aus einwertigen aliphatischen Kohlenwasserstoffresten, bevorzugt solchen mit Kohlenwasserstoffresten mit 1 bis 20 Kohlenstoffatomen, weiter bevorzugt solchen mit 1 bis 10 Kohlenstoffatomen, besonders bevorzugt CH₃. Es ist also besonders bevorzugt, dass gilt: R" = R¹ = CH₃.

Es ist bevorzugt, dass von denjenigen organischen Resten, die an den Siliziumatomen des Organosiloxans (I) gebunden sind, die aber keine Reste R^{(Aryl)} umfassen, mindestens 90%, bevorzugt mindestens 95%, besonders bevorzugt mindestens 99% Methylreste sind.

Es ist weiterhin bevorzugt, dass an den Siliziumatomen des Organosiloxans (I) als organische Reste mindestens 80%, vorzugsweise mindestens 90%, besonders bevorzugt mindestens 99%, Methylreste und einwertige Reste der Formel -(CH₂-CH₂)-Ph sind. Es ist insbesondere bevorzugt, dass an den Siliziumatomen des Organosiloxans (I) als organische Reste nur Methylreste und einwertige Reste der Formel -(CH₂-CH₂)-Ph gebunden sind.

Es ist weiterhin bevorzugt, dass das molare Verhältnis von Methylresten zu Resten der Formel -(CH₂-CH₂)-Ph 20:1 bis 1,5:1 beträgt.

Vorzugsweise ist das Organosiloxan (I) linear. In dieser bevorzugten Ausführungsform ist das Organosiloxan (I) aus D-Einheiten und zwei M-Einheiten aufgebaut.

Die Organosiloxane (I) werden vorzugsweise mittels Hydrosilylierung auf die dem Fachmann bekannte Weise hergestellt, wie beispielsweise in EP 1640418 A1 beschrieben. Dabei werden die entsprechenden hydrosilyl-funktionellen Organosiloxane mit olefinisch ungesättigten Verbindungen nach bekannten Verfahren umgesetzt. Vorzugsweise werden besagte olefinisch ungesättigte Verbindungen ausgewählt aus der Gruppe bestehend aus Styrol, 2-Methylstyrol, 3-Methylstyrol, 4-Methylstyrol und α-Methylstyrol, vorzugsweise Styrol. Die Hydrosilylierungsreaktion wird dabei bevorzugt mit Hilfe der dem Fachmann geläufigen Katalysatoren der Platingruppe katalysiert, mehr bevorzugt mit Hilfe von Karstedt-Katalysatoren.

Das Organosiloxan (I) verbessert die Eigenschaften von Trennbeschichtungen. Diese Trennbeschichtungen werden aus Zusammensetzungen hergestellt, die mindestens ein weiteres Organosiloxan (II) aufweisen. Dieses weitere Organosiloxan (II) weist mindestens eine ethylenisch ungesättigte, radikalisch polymerisierbare Gruppe auf, sodass die Zusammensetzung durch Strahlung, insbesondere UV-Strahlung, oder thermisch gehärtet werden kann, gegebenenfalls unter Zuhilfenahme von thermisch aktivierbaren oder durch Strahlung aktivierbaren Initiatoren.

Es ist vorteilhaft, wenn das Organosiloxan (II) 50 bis 500, bevorzugt 55 bis 300, mehr bevorzugt 60 bis 200, besonders bevorzugt 60 bis 180 Siliziumatome aufweist.

Es ist weiterhin vorteilhaft, wenn 0,4% bis 10%, bevorzugt 0,6% bis 8%, mehr bevorzugt 0,8% bis 7% der Siliziumatome des Organosiloxans (II) ethylenisch ungesättigte, radikalisch polymerisierbare Gruppen tragen, wobei ein Siliziumatom ein, zwei oder drei solcher Gruppen tragen kann.

Es ist entsprechend weiterhin vorteilhaft, dass von den an den Siliziumatomen des Organosiloxans (II) gebundenen organischen Resten 0,4% bis 10%, bevorzugt 0,6% bis 8%, mehr bevorzugt 0,8% bis 7% ethylenisch ungesättigte, radikalisch polymerisierbare Gruppen aufweisen.

Bevorzugt ist das mindestens eine Organosiloxan (II) eine Verbindung der allgemeinen Formel (II):

M³ₘ₃M⁴ₘ₄D³_{d3}D⁴_{d4} (II);

mit
- M³: = [R³₃SiO_{1/2}];
- M⁴: = [R³₂R⁴SiO_{1/2}];
- D³: = [R³₂SiO_{2/2}];
- D⁴: = [R³R⁴SiO_{2/2}];
worin
- R³: jeweils unabhängig voneinander ausgewählt ist aus der Gruppe bestehend aus einwertigen aliphatischen Kohlenwasserstoffresten mit 1 bis 20 Kohlenstoffatomen, bevorzugt 1 bis 10 Kohlenstoffatomen, besonders bevorzugt Methylgruppen;
- R⁴: jeweils unabhängig voneinander ausgewählt ist aus der Gruppe bestehend aus einwertigen nichtaromatischen organischen Resten bestehend aus Kohlenstoff, Wasserstoff und Sauerstoff, bevorzugt mit 2 bis 100 Kohlenstoffatomen, die 1 bis 5 Estergruppen aufweisen, wobei die Estergruppen ausgewählt sind aus der Gruppe bestehend aus ethylenisch ungesättigten, radikalisch polymerisierbaren Estergruppen und optional nicht radikalisch polymerisierbaren Estergruppen;
wobei gilt:
- m3: = 0 bis 2;
- m4: = 0 bis 2, wobei m3 + m4 = 2;
- d3: = 50 bis 490, bevorzugt 60 bis 290, mehr bevorzugt 70 bis 190, besonders bevorzugt 80 bis 170;
- d4: = 0 bis 15, bevorzugt 0 bis 10.

Vorzugsweise gilt weiterhin die Maßgabe, dass
das Verhältnis der Summe (m4 + d4) zur Summe (d3 + d4 + 2) von 0,004 bis zu 0,1, bevorzugt 0,006 bis 0,8, und mehr bevorzugt 0,008 bis 0,7 beträgt; und
die Summe (d3 + d4 + 2) gleich 50 bis 500, bevorzugt 60 bis 300, mehr bevorzugt 70 bis 200, besonders bevorzugt 80 bis 180 beträgt.

Bevorzugt weisen die Reste R⁴ in Verbindungen der Formel (II) als ethylenisch ungesättigte, radikalisch polymerisierbare Estergruppen solche auf, die ausgewählt sind aus Acrylsäureestergruppen und/oder Methacrylsäureestergruppen, besonders bevorzugt Acrylsäureestergruppen.

Bevorzugt weisen die Reste R⁴ in Verbindungen der Formel (II) als nicht radikalisch polymerisierbare Estergruppen gesättigte Monocarbonsäureestergruppen auf. Bevorzugt sind die nicht radikalisch polymerisierbaren Estergruppen ausgewählt aus Essigsäure-, Propionsäure-, Buttersäure-, Valeriansäure- und Benzoesäure-Estergruppen, besonders bevorzugt Essigsäureestergruppen. Mehr bevorzugt sind die gesättigten Monocarbonsäureestergruppen zu einem numerischen Anteil von 0% bis 20%, bevorzugt von größer 0% bis 15 % bezogen auf die Anzahl aller Estergruppen der Verbindungen der Formel (II) enthalten. Bevorzugt weisen die Reste R⁴ in Verbindungen der Formel (I) keine Estergruppen auf, die nicht radikalisch polymerisierbar sind.

Vorzugsweise beträgt der Massenanteil der Komponente (I) 0,1% bis 20%, weiter bevorzugt 0,2% bis 15%, mehr bevorzugt 0,5% bis 10% und der Massenanteil der Komponente (II) 20% bis 99,9%, weiter bevorzugt 40% bis 99,8%, mehr bevorzugt 60% bis 99,5% bezogen auf die Gesamtmasse der Zusammensetzung.

Besonders bevorzugt sind solche Komponenten (II) beziehungsweise Organosiloxane (II), wie sie in der WO2016096595 offenbart sind, wobei sie dort als Komponente (II) beziehungsweise Verbindungen der Formel (I) bezeichnet werden.

Komponente (II) beziehungsweise Organosiloxane (II) sind kommerziell beispielsweise unter der Bezeichnung TEGO^{®} RC 902 und TEGO^{®} RC 702 von der Firma Evonik Nutrition&Care GmbH erhältlich.

Es ist bevorzugt, dass die Zusammensetzung weiterhin neben den Komponenten (I) und (II) zusätzlich noch eine Komponente (III) enthält, wobei die Komponente (III) mindestens ein von den Organosiloxanen (I) und (II) unterschiedliches Organosiloxan (III) ist. Komponente (III) besteht also aus einem oder mehreren Organosiloxanen (III), die sich von den Organosiloxanen (I) und (II) unterscheiden.

Es ist vorteilhaft, dass das Organosiloxan (III) 4 bis 40, bevorzugt 10 bis 30 Siliziumatomen, aufweist.

Es ist weiterhin vorteilhaft, dass 15% bis 100%, bevorzugt 20% bis 50% der Siliziumatome ethylenisch ungesättigten, radikalisch polymerisierbare Gruppen tragen, wobei ein Siliziumatom ein, zwei oder drei solcher Gruppen tragen kann.

Es ist entsprechend weiterhin vorteilhaft, dass von den an den Siliziumatomen des Organosiloxans (III) gebundenen organischen Resten 15% bis 100%, bevorzugt 20% bis 50% ethylenisch ungesättigte, radikalisch polymerisierbare Gruppen aufweisen.

Bevorzugt ist das mindestens eine Organosiloxan (III) eine Verbindung der allgemeinen Formel (III):

M⁵ₘ₅M⁶ₘ₆D⁵_{d5}D⁶_{d6} (III);

mit
- M⁵: = [R⁵₃SiO_{1/2}];
- M⁶: = [R⁵₂R⁶SiO_{1/2}];
- D⁵: = [R⁵₂SiO_{2/2}];
- D⁶: = [R⁵R⁶SiO_{2/2}];
worin
- R⁵: jeweils unabhängig voneinander ausgewählt ist aus der Gruppe bestehend aus einwertigen aliphatischen Kohlenwasserstoffresten mit 1 bis 20 Kohlenstoffatomen, bevorzugt 1 bis 10 Kohlenstoffatomen, besonders bevorzugt Methylgruppen;
- R⁶: jeweils unabhängig voneinander ausgewählt ist aus der Gruppe bestehend aus einwertigen nichtaromatischen organischen Resten bestehend aus Kohlenstoff, Wasserstoff und Sauerstoff, bevorzugt mit 2 bis 100 Kohlenstoffatomen, die 1 bis 5 Estergruppen aufweisen, wobei die Estergruppen ausgewählt sind aus der Gruppe bestehend aus ethylenisch ungesättigten, radikalisch polymerisierbaren Estergruppen und optional nicht radikalisch polymerisierbaren Estergruppen;
wobei gilt:
- m5: = 0 bis 2;
- m6: = 0 bis 2, bevorzugt 0, wobei m5 + m6 = 2;
- d5: = 0 bis 38, bevorzugt 10 bis 26;
- d6: = 0 bis 20, bevorzugt 4 bis 15;

Vorzugsweise gilt weiterhin die Maßgabe, dass
das Verhältnis der Summe (m6 + d6) zur Summe (d5 + d6 + 2) von 0,15 bis zu 1 ist, bevorzugt von 0,2 bis 0,5 beträgt; und
die Summe (d5 + d6 + 2) von 4 bis 40, bevorzugt von 10 bis 30 beträgt.

Bevorzugt weisen die Reste R⁶ in Verbindungen der Formel (III) als ethylenisch ungesättigte, radikalisch polymerisierbare Estergruppen solche auf, die ausgewählt sind aus Acrylsäureestergruppen und/oder Methacrylsäureestergruppen, besonders bevorzugt Acrylsäureestergruppen.

Bevorzugt weisen die Reste R⁶ in Verbindungen der Formel (III) als nicht radikalisch polymerisierbare Estergruppen gesättigte Monocarbonsäureestergruppen auf. Bevorzugt sind die nicht radikalisch polymerisierbaren Estergruppen ausgewählt aus Essigsäure-, Propionsäure-, Buttersäure-, Valeriansäure- und Benzoesäure-Estergruppen, besonders bevorzugt Essigsäureestergruppen. Mehr bevorzugt sind die gesättigten Monocarbonsäureestergruppen zu einem numerischen Anteil von 3% bis 20%, bevorzugt 5% bis 15% bezogen auf die Anzahl aller Estergruppen der Verbindungen der Formel (III) enthalten.

Bevorzugt beträgt der Massenanteil der Komponente (III) 0% bis 70%, weiter bevorzugt 20% bis 50%, mehr bevorzugt 25% bis 45% bezogen auf die Gesamtmasse der Zusammensetzung.

Besonders bevorzugt sind solche Komponenten (III) beziehungsweise Organosiloxane (III), wie sie in der WO2016096595 offenbart sind, wobei sie dort als Komponente (III) beziehungsweise Verbindungen der Formel (II) bezeichnet werden.

Komponente (III) beziehungsweise Organosiloxane (III) sind kommerziell unter der Bezeichnung TEGO^{®} RC 711 von der Firma Evonik Nutrition&Care GmbH erhältlich.

Organosiloxane mit Acrylsäureestergruppen können beispielsweise dadurch hergestellt werden, dass man an ein hydrosilyl-funktionelles Organosiloxan ein Allylglycidether oder ein anderes geeignetes Epoxid mit einer olefinischen Doppelbindung über eine Hydrosilylierungsreaktion addiert und nach der Anlagerung das Epoxid mit Acrylsäure unter Öffnung des Epoxidringes verestert. Diese Verfahrensweise ist in der DE-C-3820294 und der EP0979851 beschrieben.

Eine weitere Möglichkeit der Herstellung acrylatmodifizierter Organosiloxane besteht darin, dass man an ein hydrosilyl-funktionelles Organosiloxan einen Alkohol mit einer olefinischen Doppelbindung, beispielsweise Allylalkohol, in Gegenwart eines Platinkatalysators, addiert und dann die Hydroxylgruppe dieses Alkohols mit Acrylsäure oder einem Gemisch von Acrylsäure und optional anderen gegebenenfalls gesättigten Monocarbonsäuren umsetzt. Diese Verfahrensweise ist beispielsweise in der DE-C-3810140 und der EP0979851 beschrieben.

Werden andere ethylenisch ungesättigte Säuren oder auch gesättigte Säuren verwendet, so können auf analoge Weise Organsiloxane mit anderen ethylenisch ungesättigten, radikalisch polymerisierbaren Estergruppen oder auch mit nicht radikalisch polymerisierbaren Estergruppen erhalten werden.

Mischungen von mehreren (meth)acrylierten Organosiloxanen mit unterschiedlichen Kettenlängen und/oder Modifizierungsarten sind aus dem Stand der Technik bekannt, beispielsweise aus: US 6,548,568, US 6,268,404, US 6,548,568, der Veröffentlichung "*TEGO*^{®} RC *Silicones, Application Guide",* sowie den Produktdatenblättern zu den Produkten TEGO^{®} RC 902, RC 726, RC 711, RC 708, RC 709, RC 715, RC 706. Ein niedrig modifiziertes, hochmolekulares Silikonacrylat ist dabei hauptsächlich für die Trenneigenschaften verantwortlich, während hochmodifizierte Silikonacrylate für eine gute Haftung zum Substrat sorgen. Darüber hinaus können zu einem oder einer Mischung von mehreren (meth)acrylierten Organosiloxanen eine oder mehrere organische (meth)acrylierte Verbindungen, zum Beispiel als Haftkomponenten oder als Reaktivverdünner, zugesetzt werden. Die Verwendung solcher Kombinationen von (meth)acrylierten Verbindungen hat gegenüber den Einzelkomponenten beispielsweise den Vorteil einer verbesserten Haftung am Untergrund, des gezielten Einstellens der Abhäsivität oder der Verringerung oder Erhöhung der Viskosität.

Es ist daher weiterhin bevorzugt, dass die Zusammensetzung eine Komponente (IV) enthält, die mindestens eine von den Organosiloxanen (I), (II) und (III) unterschiedliche Verbindung (IV) ist.

Die Zusammensetzung umfasst also neben den Komponenten (I) und (II) optional noch die Komponente (III) und/oder Komponente (IV).

Die Verbindung (IV) ist eine aus den Elementen Kohlenstoff, Wasserstoff und Sauerstoff bestehende organische Verbindung, die 2 bis 6 ethylenisch ungesättigte, radikalisch polymerisierbare Gruppen und sowie mindestens eine Oxyethylengruppe aufweist. Die Verbindung (IV) beziehungsweise die Komponente (IV) sind demnach frei von Siliziumatomen. Solche Verbindungen können strahlenhärtende Beschichtungsmassen auf rein organischer Basis sein, wie beispielsweise in European Coatings Tech Files, Patrick Glöckner et al. "Radiation Curing Coatings and printing inks", 2008, Vincentz Network, Hannover, Germany beschrieben.

Besonders bevorzugt sind strahlenhärtende Beschichtungsmassen auf rein organischer Basis, wie sie in der WO2016096595 beschrieben sind. Besonders bevorzugt sind daher solche Komponenten (IV) beziehungsweise Verbindungen (IV), wie sie in der WO2016096595 offenbart sind, wobei sie dort als Komponente (I) bezeichnet werden. Bevorzugt weist die Komponente (IV) beziehungsweise die Verbindung (IV) daher pro ethylenisch ungesättigter, radikalisch polymerisierbarer Gruppe 1 bis 25, bevorzugt 1 bis 5 Oxyethylengruppen auf; besonders bevorzugt pro Acrylsäureestergruppe und/oder Methacrylsäureestergruppe 1 bis 25, bevorzugt 1 bis 5 Oxyethylengruppen. Weiter bevorzugt weist die Komponente (IV) beziehungsweise die Verbindung (IV) neben der mindestens einen Oxyethylengruppe auch noch Oxypropylengruppen auf, wobei mehr bevorzugt die Anzahl der Oxypropylengruppen niedriger als die der Oxyethylengruppen ist, besonders bevorzugt lediglich höchstens 20% der Oxyalkylgruppen keine Oxyethylengruppen sind, bezogen auf die Gesamtzahl der Oxyalkylgruppen der Komponente (IV) beziehungsweise der Verbindung (IV).

Komponente (IV) beziehungsweise Verbindungen (IV) sind kommerziell unter dem Handelsnamen Ebecryl TMPTA, Ebecryl OTA480, Ebecryl TPGDA, Ebecryl DPGDA, Ebecryl 892 und Ebecryl 11 von der Firma Allnex / Belgien erhältlich.

Bevorzugt beträgt der Massenanteil der Komponente (IV) 0% bis 40%, weiter bevorzugt 2% bis 20%, mehr bevorzugt 3% bis 15% bezogen auf die Gesamtmasse der Zusammensetzung.

Die Komponenten (II), (III) und (IV) beziehungsweise die Organosiloxane (II) und (III) sowie die Verbindung (IV) weisen ethylenisch ungesättigte, radikalisch polymerisierbare Gruppen auf.

Vorzugsweise handelt es sich bei den ethylenisch ungesättigten, radikalisch polymerisierbaren Gruppen um ethylenisch ungesättigte, radikalisch polymerisierbare Estergruppen. Weiter bevorzugt sind die ethylenisch ungesättigten, radikalisch polymerisierbaren Gruppen jeweils unabhängig ausgewählt aus der Gruppe bestehend aus Methacrylsäureestergruppen und Acrylsäureestergruppen, noch weiter bevorzugt Acrylsäureestergruppen. Beispielsweise können das Organosiloxan (II) und/oder das Organosiloxan (III) Reste der Formel -CH₂CH₂CH₂OCH₂CH(OH)CH₂OC(=O)CH=CH₂ und/oder Reste der Formel -CH₂CH₂CH₂OCH₂CH(OH)CH₂OC(=O)C(CH₃)=CH₂ aufweisen. Besonders bevorzugte Reste mit ethylenisch ungesättigten, radikalisch polymerisierbaren Gruppen sind Reste der Formel -CH₂CH₂CH₂OCH₂CH(OH)CH₂OC(=O)CH=CH₂.

Das Organosiloxan (II) und/oder das Organosiloxan (III) können auch Estergruppen aufweisen, die nicht radikalisch polymerisierbar sind. Beispielsweise können das Organosiloxan (II) und/oder das Organosiloxan (III) Reste der Formel -CH₂CH₂CH₂OCH₂CH(OH)CH₂OC(=O)CH₂-CH₃ aufweisen.

Eine besonders bevorzugte Ausführungsform der erfindungsgemäßen Zusammensetzung ist dadurch gekennzeichnet, dass die Komponente (II) beziehungsweise das Organosiloxan (II) keine Estergruppen aufweist, die nicht radikalisch polymerisierbar sind, wohingegen die Komponente (III) beziehungsweise das Organosiloxan (III) Estergruppen aufweist, die nicht radikalisch polymerisierbar sind. Es ist insbesondere bevorzugt, dass die Komponente (II) beziehungsweise das Organosiloxan (II) als Reste mit Estergruppen nur Reste der Formel -CH₂CH₂CH₂OCH₂CH(OH)CH₂OC(=O)CH=CH₂ aufweist, und die Komponente (III) beziehungsweise das Organosiloxan (III) als Reste mit Estergruppen sowohl Reste der Formel -CH₂CH₂CH₂OCH₂CH(OH)CH₂OC(=O)CH=CH₂ als auch Reste der Formel -CH₂CH₂CH₂OCH₂CH(OH)CH₂OC(=O)CH₂-CH₃ aufweist.

Vorzugsweise weist die Komponente (II) beziehungsweise das Organosiloxan (II) keine Estergruppen auf, die nicht radikalisch polymerisierbar sind.

Es ist weiterhin bevorzugt, dass die Komponente (III) beziehungsweise das Organosiloxan (III) neben den ethylenisch ungesättigten, radikalisch polymerisierbaren Gruppen auch noch nicht radikalisch polymerisierbare Estergruppen aufweist.

Besonders bevorzugt ist eine Zusammensetzung enthaltend
0,1% bis 20% Komponente (I),
20% bis 99,9% Komponente (II),
0% bis 45% Komponente (III),
0% bis 15% Komponente (IV),
angegeben als Massenanteil bezogen auf die Gesamtmasse der Zusammensetzung.

Eine bevorzugte Zusammensetzung enthält neben den Komponenten (I) und (II) und den optionalen Komponenten (III) und (IV) noch eine oder mehrere zusätzliche Komponenten, die sich von den Komponenten (I), (II) (III) und (IV) unterscheiden.

Erfindungsgemäß werden die Zusammensetzungen als strahlenhärtende Beschichtungsmassen verwendet, wobei die ausgehärtete Beschichtungsmasse eine Trennbeschichtung ist.

Die erfindungsgemäßen strahlenhärtenden Beschichtungsmassen können dreidimensional durch freie Radikale vernetzt werden und härten thermisch unter Zusatz von z. B. Peroxiden oder unter Einfluss energiereicher Strahlung, wie UV- oder Elektronenstrahlung, innerhalb kürzester Zeit zu mechanisch und chemisch widerstandsfähigen Schichten aus, die bei geeigneter Zusammensetzung der erfindungsgemäßen Beschichtungsmassen vorbestimmbare abhäsive Eigenschaften wie auch Haftungseigenschaften aufweisen.

Wird als Strahlung UV-Strahlung verwendet, erfolgt die Vernetzung/Härtung vorzugsweise in Anwesenheit von Photoinitiatoren und/oder Photosensibilisatoren. Bevorzugt sind Photoinitiatoren vom Norrish-Typ 1, wie beispielsweise Benzophenon, Benzoin, α-Hydroxyalkylphenon, Acylphosphinoxid oder ihre Derivate. Übliche Photoinitiatoren werden beispielsweise beschrieben in *"*A Compilation of Photoinitiators Commercially available for UV today" (K. Dietliker, SITA Technology Ltd, London 2002*).* Bevorzugte erfindungsgemäße strahlenhärtende Beschichtungsmassen weisen Photoinitiatoren und/oder Photosensibilisatoren in einem Massenanteil von 0,01% bis 10%, insbesondere von 0,1% bis 5% auf, bezogen auf die Masse der gesamten Beschichtungsmasse. Die Photoinitiatoren und/oder Photosensibilisatoren sind bevorzugt in den erfindungsgemäßen Zusammensetzungen löslich, mehr bevorzugt löslich in einem Massenanteil von 0,01% bis 10%, insbesondere von 0,1% bis 5% bezogen auf die Masse der gesamten Beschichtungsmasse.

Eine bevorzugte Zusammensetzungen enthält daher neben den Komponenten (I) und (II) und den optionalen Komponenten (III) und (IV) zusätzlich davon unterschiedliche Komponenten ausgewählt aus der Gruppe bestehend aus rein organischen phosphorhaltigen oder phosphorfreien Verbindungen, mit mindestens einer ethylenisch ungesättigten, radikalisch polymerisierbare Gruppe, welche vorzugsweise unter UV-Strahlung polymerisieren, Photoinitiatoren, Photosensibilisatoren, Füllstoffen, Pigmenten, Lösemitteln, Härtungsbeschleunigern, Anti-Misting-Additiven, Amin-Synergisten und Stabilisatoren, wie beispielsweise Phosphiten oder *hindered amine light stabilizers (HALS),* Antioxidationsmitteln und Sauerstofffängern. Vorzugsweise polymerisieren die besagten rein organischen phosphorhaltigen oder phosphorfreien Verbindungen, die mindestens eine ethylenisch ungesättigte, radikalisch polymerisierbare Gruppe aufweisen, unter UV-Strahlung. Erfindungsgemäß wird die Zusammensetzung derart verwendet, dass die ausgehärtete Beschichtungsmasse eine Trennbeschichtung ist.

Diese Trennbeschichtung enthält das Organosiloxan (I).

Ein weiterer Gegenstand der Erfindung ist ein Verfahren zur Herstellung einer Trennbeschichtung, umfassend die mittelbar oder unmittelbar aufeinanderfolgenden Schritte:
a. Auftragen einer erfindungsgemäßen Zusammensetzung auf eine Oberfläche;
b. Bestrahlen der Zusammensetzung mit UV-Strahlung.

Es ist dabei bevorzugt, dass es sich bei der Oberfläche um eine Oberfläche eines Trägers, vorzugsweise eines flächigen Trägers handelt. Die erfindungsgemäße Zusammensetzung kann dabei einseitig oder beidseitig auf den flächigen Träger aufgetragen werden. Vorzugsweise wird der flächige Träger ausgewählt aus der Gruppe bestehend aus Papier, Gewebe, Metallfolien und Kunststofffolien. Der Träger kann glatt oder auch mit oberflächlichen Strukturen versehen sein. Besonders bevorzugte Träger sind Polypropylen- und Polyethylen-Folien.

Geeignete UV-Strahlenquellen zur Aushärtung der erfindungsgemäßen Beschichtungsmassen sind Mitteldruckquecksilberdampflampen, gegebenenfalls dotiert oder Niederdruckquecksilberdampflampen, UV-LED-Lampen oder sogenannte Excimerstrahler. Die UV-Strahler können polychromatisch oder monochromatisch sein. Bevorzugt liegt der Emissionsbereich des Strahlers im Absorptionsbereich der Photoinitiatoren und/oder Photosensibilisatoren.

Besonders bevorzugt ist weiterhin das durch das erfindungsgemäße Verfahren erhältliche Verfahrensprodukt.

Ein weiterer Gegenstand der Erfindung ist daher eine Trennbeschichtung erhältlich durch die erfindungsgemäße Verwendung und/oder durch das erfindungsgemäße Verfahren.

Ein weiterer Gegenstand der Erfindung ist daher auch eine Trennbeschichtung erhältlich durch die Verwendung der erfindungsgemäßen strahlenhärtenden Beschichtungsmasse, wobei die ausgehärtete Beschichtungsmasse eine Trennbeschichtung ist.

Ein weiterer Gegenstand der Erfindung ist daher auch eine Trennbeschichtung erhältlich durch Aushärtung der erfindungsgemäßen Zusammensetzung, vorzugsweise mittels Bestrahlens der erfindungsgemäßen Zusammensetzung, insbesondere mittels Bestrahlens der erfindungsgemäßen Zusammensetzung mit UV-Strahlung.

Ein weiterer Gegenstand der Erfindung ist daher auch eine Trennbeschichtung erhältlich durch Aushärtung einer Zusammensetzung enthaltend die Komponenten (I) und (II), wobei Komponente (I) mindestens ein Organosiloxan (I) ist, und Komponente (II) mindestens ein von Organosiloxan (I) unterschiedliches Organosiloxan (II) mit mindestens einer ethylenisch ungesättigten, radikalisch polymerisierbaren Gruppe ist, vorzugsweise mittels Bestrahlens, insbesondere mittels Bestrahlens mit UV-Strahlung.

Bevorzugt ist ein mit einer Trennbeschichtung ausgerüsteter Träger, dadurch gekennzeichnet, dass die Trennbeschichtung mindestens ein Organosiloxan (I) umfasst und aus einer erfindungsgemäßen Zusammensetzung, die mindestens ein Organosiloxan (I) umfasst, herstellbar ist, wobei der Träger vorzugsweise ausgewählt ist aus der Gruppe bestehend aus Papier, Gewebe, Metallfolien, Kunststofffolien, besonders bevorzugt Polypropylen- und Polyethylen-Folien.

Besonders bevorzugt ist also die erfindungsgemäße Verwendung des Organosiloxans (I) in Trennbeschichtungen auf Trägern ausgewählt aus der Gruppe bestehend aus Papier, Gewebe, Metallfolien, Kunststofffolien, besonders bevorzugt Polypropylen- und Polyethylen-Folien.

Die Trennbeschichtungen finden beispielsweise Anwendung in Klebebändern, Etiketten, Verpackungen für selbstklebende Hygieneprodukte, Lebensmittelverpackungen, selbstklebenden Thermopapieren oder Abdeckbahnen für Bitumendachbahnen. Die Trennbeschichtungen weisen eine gute Trennwirkung gegen die in diesen Anwendungen zur Anwendung kommenden klebenden Massen auf.

Die Trennwirkung gegen klebende Materialien, in der technischen Anwendung zumeist Klebebänder oder Etiketten, wird durch den Trennwert ausgedrückt, wobei ein niedriger Trennwert eine gute Trennwirkung beschreibt. Der Trennwert wird gemäß FINAT Handbook 8th Edition, The Hague/NL, 2009 unter der Bezeichnung FTM 10 bestimmt, mit der Änderung, dass die Lagerung unter Druck bei 40 °C durchgeführt wird Der Trennwert hängt von der Qualität der Trennbeschichtung (z.B. Gleichmäßigkeit, Dicke und/oder Glätte der Beschichtung), vom klebenden Material beziehungsweise Klebstoff und von den Testbedingungen ab. Zur Bewertung von Trennbeschichtungen sollen deshalb gleiche Klebstoffe beziehungsweise klebende Materialien und Testbedingungen vorliegen. Für die Ermittlung der Trennwerte wird das Klebeband Tesa^{®}7475, Warenzeichen der Firma Tesa SE, Deutschland, Hamburg in 2,5 cm Breite verwendet.

Bevorzugt weisen die erfindungsgemäßen Trennbeschichtungen Trennwerte von maximal 20 cN / 2,5 cm, mehr bevorzugt von maximal 10 cN / 2,5 cm, besonders bevorzugt von maximal 8 cN / 2,5 cm auf, wobei die Trennwerte mindestens 0,5 cN / 2,5 cm, bevorzugt mindestens 1 cN / 2,5 cm betragen.

In den nachfolgend aufgeführten Beispielen wird die vorliegende Erfindung beispielhaft beschrieben, ohne dass die Erfindung, deren Anwendungsbreite sich aus der gesamten Beschreibung, und den Ansprüchen ergibt, auf die in den Beispielen genannten Ausführungsformen beschränkt gelesen werden kann.

### Beispiele

### Allgemeine Methoden:

Die Charakterisierung der Organosiloxane erfolgt mit Hilfe der ¹H- und ²⁹Si-NMR-Spektroskopie erfolgen. Diese Methoden sind dem Fachmann geläufig.

### Nicht erfindungsgemäße phenylgruppenhaltige Organosiloxane

Als nicht erfindungsgemäße Organosiloxane wurden kommerziell verfügbare phenylhaltige Organosiloxane der Firmen The DOW Chemical Company und Gelest Inc. verwendet (s. Tabelle 1a):

**Tabelle 1a: Strukturaufbau der kommerziell verfügbaren, nicht erfindungsgemäßen phenylgruppenhaltige Organosiloxane**

| Bezeichnung | Handelsname | Rohstoff gemäß Herstellerangaben | Viskosität gemäß Herstellerangaben |
|---|---|---|---|
| NE-1 | DOW Dowsil 510 Fluid | Phenylmethylpolysiloxan | 50 cSt |
| NE-2 | Gelest PMM-1021 | Polyphenylmethyldimethylsiloxan | 500 cSt |
| NE-3 | Gelest PMM-1015 | Polyphenylmethyldimethylsiloxan | 125 cSt |
| NE-4 | Gelest PMM-1025 | Polyphenylmethyldimethylsiloxan | 50 cSt |

Bei diesen Produkten handelt es sich nach Angaben aus dem technischen Datenblatt um Organosiloxane mit direkt am Silizium gebundenen Phenylgruppen. Dies konnte durch ²⁹Si-NMR Untersuchung durch Anwesenheit von Signalen um -35 ppm bestätigt werden.

Für eine direkte Vergleichbarkeit mit den erfindungsgemäßen Organosiloxanen wurden zusätzlich zwei nicht erfindungsgemäße Organosiloxane synthetisiert (s. Tabelle 1b). Die Synthese erfolgte aus zyklischen Phenyl-Methyl-Siloxanen nach Cheng Li et al. "Ring-Opening Copolymerization of Mixed Cyclic Monomers: A Facile, Versatile and Structure-Controllable Approach to Preparing Poly(methylphenylsiloxane) with Enhanced Thermal Stability", Ind. Eng. Chem. Res. 2017, 56, 7120-7130*.*

**Tabelle 1b: Strukturaufbau der nicht erfindungsgemäßen phenylgruppenhaltigen Organosiloxane**

| Bezeichnung | Si-Atome ohne Phenylgruppen ^{[a]} | Si-Atome mit Phenylgruppen ^{[a]} | Gesamtzahl der Si-Atome ^{[a]} | Anteil der Si-Atome mit Phenylgruppen in % ^{[b]} |
|---|---|---|---|---|
| NE-5 | 50 | 6 | 56 | 10,7 |
| NE-6 | 20 | 6 | 26 | 23,1 |

| | | | | |
|---|---|---|---|---|
| ^{[a]} mittlere Anzahl pro Organosiloxan ^{[b]} mittlerer molarer Anteil pro Organosiloxan | | | | |

### Erfindungsgemäße Organosiloxane (I)

Die erfindungsgemäßen Organosiloxane (I) wurden durch Equilibrierung jeweils eines wasserstoffhaltigen Polydimethylsiloxans und anschließender Hydrosilylierung unter Platinkatalyse mit Styrol oder Alphamethylstyrol, wie in EP 1640418 A1 beschrieben, hergestellt. Im ²⁹Si-NMR fehlen Signale um -35ppm (s. Tabelle 2).

**Tabelle 2: Strukturaufbau der erfindungsgemäßen Organosiloxane**

| Bezeichnung | Si-Atome ohne Phenylgruppen ^{[a]} | Si-Atome mit Phenylgruppen ^{[a]} | Gesamtzahl der Si-Atome ^{[a]} | Anteil der Si-Atome mit Phenylgruppen in % ^{[b]} |
|---|---|---|---|---|
| E-1 | 50 | 6 | 56 | 10,7 |
| E-2 | 20 | 6 | 26 | 23,1 |
| E-3 | 67 | 4 | 71 | 5,6 |
| E-4 | 108 | 42 | 150 | 28,0 |
| E-5 | 80 | 25 | 105 | 23,8 |
| E-6 | 45 | 10 | 55 | 18,1 |

| | | | | |
|---|---|---|---|---|
| ^{[a]} mittlere Anzahl pro Organosiloxan ^{[b]} mittlerer molarer Anteil pro Organosiloxan | | | | |

Die erfindungsgemäße Verbindung E-1 entspricht im Strukturaufbau der nicht erfindungsgemäßen Verbindung NE-5. Die erfindungsgemäßen Verbindung E-2 entspricht im Strukturaufbau der nicht erfindungsgemäßen Verbindung NE-6.

### Radikalisch polymerisierbare Organosiloxane (II) und (III)

Die erfindungsgemäßen und die nicht erfindungsgemäßen phenylgruppenhaltigen Organsiloxane wurden in den weit verbreitet angewendeten TEGO^{®} RC Organosiloxane der Evonik Nutrition&Care GmbH eingesetzt. Es wurden mit Acrylatgruppen modifizierte Silikone ausgewählt. Zur Anwendung kamen zwei Silikonmischungen (Tabelle 3):

**Tabelle 3: Radikalisch polymerisierbare Organosiloxane**

| Bezeichnung | Organosiloxanmischungen |
|---|---|
| M-1 | TEGO^{®} RC 902, TEGO^{®} RC 711 und TEGO^{®} Photoinitiator A18 im Gewichtsverhältnis 70:30:2 |
| M-2 | TEGO^{®} RC 702 enthält bereits vorformuliert den Photoinitiator A18 |

TEGO^{®} RC 902 und TEGO^{®} RC 702 sind ein Organosiloxan (II). Nach ²⁹Si-NMR und ¹H-NMR Analyse handelt es sich bei diesen Organosiloxanen um langkettige Silikone mit einer geringen Modifizierung durch Acrylatgruppen. TEGO^{®} RC 711 ist ein Organosiloxan (III). Nach ²⁹Si-NMR und ¹H-NMR-Analyse handelt es sich bei diesem Organosiloxan um ein kurzkettiges Silikon mit hohem Gehalt an Acrylatgruppen. Gemäß den Angaben aus dem technischen Datenblatt sorgt dieses TEGO^{®} RC 711 für eine gute Verankerung der Beschichtungsmasse auf dem Substrat.

### Anwendungstechnische Überprüfung der Benzolabspaltung

Die Probe wird mittels TGA (Messinstrument: TA Instruments, Discovery TGA) pyrolysiert. Die Prüfung wird an den reinen phenylgruppenhaltigen Organosiloxanen aus den Tabellen 1a, 1b und 2 vorgenommen. Um Kontaminationen durch andere Mischungskomponenten auszuschließen sind die weiteren Komponenten aus Tabelle 3 nicht enthalten. Es werden 0,5 mg der Probe eingewogen und mit einer Aufheizrate von 200 °C/min von 30 °C auf 400 °C gebracht. Die Temperatur von 400 °C wird für 5 min gehalten. Während der Aufheizphase und der Verweilzeit bei 400 °C werden die Emissionen auf Tenax^{®} TA, (polymeres Adsorberharz auf Basis von Poly(2,6-diphenyl-p-phenylenoxid, kommerziell erhältlich von Buchem BV) aufgefangen und mittels Thermodesorptionssystem-GC/MS (Gerstel, Agilent) analysiert. Das Ergebnis wird als Toluol-Äquivalent in µg/g angegeben. Die Ergebnisse dieser Untersuchung sind in Tabelle 4 festgehalten:

**Tabelle 4: Ergebnisse der Benzolabspaltung**

| Bezeichnung | Benzolabspaltung µg/g |
|---|---|
| NE-1 | 961 |
| NE-2 | 535 |
| NE-3 | 602 |
| NE-4 | 202 |
| NE-5 | 857 |
| NE-6 | 593 |
| E-1 | 43 |
| E-2 | 46 |
| E-3 | 34 |
| E-4 | 42 |
| E-5 | 51 |
| E-6 | 12 |

Aus Tabelle 4 ist ersichtlich, dass marktübliche Phenylsiloxane mit Phenylgruppen, die direkt am Silizium gebunden sind, deutlich mehr Benzol freisetzen als dies bei den erfindungsgemäßen Silikonen der Fall ist, bei denen der aromatische Rest über einen nichtaromatischen, organischen Rest Z an ein Siliziumatom gebunden ist. Der Unterschied der Benzolfreisetzung ist etwa um den Faktor 4 bis zu 80 geringer. Bei vergleichbarem Strukturaufbau E-1/NE-5 und E-2/NE-6 ergibt sich ein Faktor von 20 bzw. 13. Ein deutlicher Vorteil zum Stand der Technik ist somit gegeben.

### Zusammensetzungen

Die erfindungsgemäßen sowie die nicht erfindungsgemäßen phenylgruppenhaltigen Organosiloxane wurden zu 2 Gewichtsprozent den Organosiloxanmischungen M-1 und M-2 zugegeben. Die Mischungen und die Ergebnisse der anwendungstechnischen Prüfung sind in Tabelle 5 und 6 angegeben.

Das erfindungsgemäße Organosiloxan E-1 und das im strukturellen Aufbau vergleichbare nicht erfindungsgemäße Organosiloxan NE-5 wurde in verschiedenen Konzentrationen den Organosiloxanmischungen M-1 und M-2 zugegeben. Die Mischungen und die Ergebnisse der anwendungstechnischen Prüfung sind in Tabelle 7 angegeben.

### Anwendungstechnische Überprüfung des Trennverhaltens

Zur Herstellung von strahlenhärtenden Beschichtungsmassen wurden je 100 g der Zusammensetzungen nach Tabelle 5, Tabelle 6 und Tabelle 7 vermengt. Die Beschichtungsmassen wurden durch Verrühren von Hand mit einem Spatel solange gerührt bis keine Inhomogenität mehr sichtbar war. Die Beschichtungsmassen wurden auf einen flächigen Träger aufgebracht. Dieser war in allen Beispielen eine 50 cm breite BOPP-Folie (BOPP: biaxial orientiertes Polypropylen), welche zuvor mit einer Generatorleistung von 1 kW einer Coronavorbehandlung unterzogen wurde. Die Beschichtungsmassen wurde mittels eines 5-Walzenbeschichtungswerkes der Firma COATEMA^{®} Coating Machinery GmbH, Dormagen, Deutschland mit einem Flächengewicht von ca. 1 g/m² aufgetragen und durch Einwirkung von UV-Licht einer Mitteldruckquecksilberdampflampe der Firma IST^{®} Metz GmbH, Nürtingen Deutschland, mit 60 W/cm bei einer Bahngeschwindigkeit von 100 m/min unter Stickstoffatmosphäre mit einem Restsauerstoffgehalt unter 50 ppm gehärtet. Die beschichteten Proben wurden einer Prüfung auf den Trennwert unterzogen.

Die Trennwirkung gegen klebende Substanzen, in der technischen Anwendung zumeist Klebebänder oder Etiketten, wird durch den Trennwert ausgedrückt, wobei ein niedriger Trennwert eine gute Trennwirkung beschreibt. Der Trennwert hängt von der Qualität der Trennbeschichtung, vom Klebstoff und von den Testbedingungen ab. Zur Bewertung von Trennbeschichtungen sollen deshalb gleiche Klebstoffe und Testbedingungen vorliegen. Für die Ermittlung der Trennwerte werden Klebebänder oder Etikettenlaminate auf 2,5 cm breite geschnitten und die Klebeseite auf der zu testenden Silikonbeschichtung aufgebracht. Diese Prüfung wird gemäß FINAT Handbook 8th Edition, The Hague/NL, 2009 unter der Bezeichnung FTM 10 durchgeführt, mit der Änderung, dass die Lagerung unter Druck bei 40 °C durchgeführt wird. Verwendet wurde das Klebeband Tesa^{®}7475, Warenzeichen der Firma Tesa SE, Deutschland, Hamburg. Die angegebenen Werte sind Mittelwerte einer Fünffachbestimmung und werden in der Einheit [cN / 2,5 cm] angegeben. Die Ergebnisse der anwendungstechnischen Überprüfung des Trennverhaltens sind den Tabellen 5, 6 und 7 zusammengefasst.

**Tabelle 5: nicht erfindungsgemäßen Versuchsmischungen (Gehaltsangaben in Gewichtsprozent) sowie Trennwert nach anwendungstechnischer Prüfung.**

| Bezeichnung | Phenylgruppenhaltiges Organosiloxan (Gehalt) | Radikalisch polymerisierbares Organosiloxan (Gehalt) | Trennwert Tesa^{®} 7475 in cN / 2,5 cm |
|---|---|---|---|
| M-1 | Ohne | 100 | 7,8 |
| M-2 | Ohne | 100 | 9,6 |
| MNE-1-1-2 | NE-1: 2 | M-1: 98 | 8,9 |
| MNE-1-2-2 | NE-1: 2 | M-2: 98 | 10,3 |
| MNE-2-1-2 | NE-2: 2 | M-1: 98 | 6,9 |
| MNE-2-2-2 | NE-2: 2 | M-2: 98 | 8,9 |
| MNE-3-1-2 | NE-3: 2 | M-1: 98 | 7,5 |
| MNE-3-2-2 | NE-3: 2 | M-2: 98 | 9,2 |
| MNE-4-1-2 | NE-4: 2 | M-1: 98 | 7,1 |
| MNE-4-2-2 | NE-4: 2 | M-2: 98 | 9,0 |
| MNE-5-1-2 | NE-5: 2 | M-1: 98 | 7,7 |
| MNE-5-2-2 | NE-5: 2 | M-2: 98 | 9,5 |
| MNE-6-1-2 | NE-6: 2 | M-1: 98 | 7,6 |
| MNE-6-2-2 | NE-6: 2 | M-2: 98 | 9,5 |

**Tabelle 6: erfindungsgemäßen Versuchsmischungen (Gehaltsangaben in Gewichtsprozent) sowie Trennwert nach anwendungstechnischer Prüfung.**

| Bezeichnung | Phenylgruppenhaltiges Organosiloxan (Gehalt) | Radikalisch polymerisierbares Organosiloxan (Gehalt) | Trennwert Tesa^{®} 7475 in cN / 2,5 cm |
|---|---|---|---|
| M-1 | Ohne | 100 | 7,8 |
| M-2 | Ohne | 100 | 9,6 |
| ME-1-1-2 | E-1: 2 | M-1: 98 | 3,5 |
| ME-1-2-2 | E-1: 2 | M-2: 98 | 4,8 |
| ME-2-1-2 | E-2: 2 | M-1: 98 | 5,1 |
| ME-2-2-2 | E-2: 2 | M-2: 98 | 7,0 |
| ME-3-1-2 | E-3: 2 | M-1: 98 | 3,5 |
| ME-3-2-2 | E-3: 2 | M-2: 98 | 4,7 |
| ME-4-1-2 | E-4: 2 | M-1: 98 | 5,8 |
| ME-4-2-2 | E-4: 2 | M-2: 98 | 7,2 |
| ME-5-1-2 | E-5: 2 | M-1: 98 | 5,5 |
| ME-5-2-2 | E-5: 2 | M-2: 98 | 7,1 |
| ME-6-1-2 | E-6: 2 | M-1: 98 | 6,0 |
| ME-6-2-2 | E-6: 2 | M-2: 98 | 7,9 |

**Tabelle 7: Versuchsmischungen (Gehaltsangaben in Gewichtsprozent) mit unterschiedlichem Gehalt sowie Trennwert nach anwendungstechnischer Prüfung.**

| Bezeichnung | Phenylgruppenhaltiges Organosiloxan (Gehalt) | Radikalisch polymerisierbares Organosiloxan (Gehalt) | Trennwert Tesa^{®} 7475 in cN / 2,5 cm |
|---|---|---|---|
| M-1 | Ohne | 100 | 7,8 |
| ME-1-1-0,5 | E-1: 0,5 | M-1: 99,5 | 6,1 |
| ME-1-1-2 | E-1: 2 | M-1: 98 | 3,5 |
| ME-1-1-5 | E-1: 5 | M-1: 95 | 2,8 |
| MNE-5-1-0,5 | NE-5: 0,5 | M-1: 99,5 | 7,8 |
| MNE-5-1-2 | NE-5: 2 | M-1: 98 | 7,7 |
| MNE-5-1-5 | NE-5: 5 | M-1: 95 | 7,6 |
| ME-2-1-0,5 | E-2: 0,5 | M-1: 99,5 | 6,5 |
| ME-2-1-2 | E-2: 2 | M-1 98 | 5,1 |
| ME-2-1-5 | E-2: 5 | M-1: 95 | 4,1 |
| MNE-6-1-0,5 | NE-6: 0,5 | M-1: 99,5 | 7,8 |
| MNE-6-1-2 | NE-6: 2 | M-1: 98 | 7,6 |
| MNE-6-1-5 | NE-6: 5 | M-1: 95 | 7,9 |
| M-2 | Ohne | 100 | 9,6 |
| ME-1-2-0,5 | E-1: 0,5 | M-2: 99,5 | 7,2 |
| ME-1-2-2 | E-1: 2 | M-2: 98 | 4,8 |
| ME-1-2-5 | E-1: 5 | M-2: 95 | 3,5 |
| MNE-5-2-0,5 | NE-5: 0,5 | M-2: 99,5 | 9,4 |
| MNE-5-2-2 | NE-5: 2 | M-2: 98 | 9,5 |
| MNE-5-1-5 | NE-5: 5 | M-2: 95 | 9,3 |
| ME-2-2-0,5 | E-2: 0,5 | M-2: 99,5 | 8,3 |
| ME-2-2-2 | E-2: 2 | M-2: 98 | 7,0 |
| ME-2-2-5 | E-2: 5 | M-2: 95 | 5,8 |
| MNE-6-2-0,5 | NE-6: 0,5 | M-2: 99,5 | 9,3 |
| MNE-6-2-2 | NE-6: 2 | M-2: 98 | 9,5 |
| MNE-6-2-5 | NE-6: 5 | M-2: 95 | 9,5 |

Aus Tabelle 5 ist ersichtlich, dass in Beschichtungen mit nicht erfindungsgemäßen Zusammensetzungen der Trennwert der Basismischungen M-1 und M-2 nicht deutlich erniedrigt wurde. Die Beschichtungen mit erfindungsgemäßen Zusammensetzungen in Tabelle 6 zeigten dagegen durchgehend ein deutlich verbessertes Trennverhalten. Die Tabelle 7 zeigt, dass auch bei niedriger und höherer Konzentration der zugegebenen erfindungsgemäßen Silikone stets ein deutlich besseres Trennverhalten beobachtet wurde. Dies war nicht der Fall bei den nicht erfindungsgemäßen Silikonen.

## Patentansprüche

1. Verwendung von Zusammensetzungen enthaltend die Komponenten (I) und (II), wobei Komponente (I) mindestens ein Organosiloxan (I), das mindestens einen aromatischen Rest R^{(Aryl)} aufweist, der über einen nichtaromatischen organischen Rest Z an ein Siliziumatom gebunden ist, ist und Komponente (II) mindestens ein von Organosiloxan (I) unterschiedliches Organosiloxan (II) mit mindestens einer ethylenisch ungesättigten, radikalisch polymerisierbaren Gruppe ist, als strahlenhärtende Beschichtungsmassen, **dadurch gekennzeichnet, dass** die ausgehärtete Beschichtungsmasse eine Trennbeschichtung ist.

2. Verwendung nach Anspruch 1, **dadurch gekennzeichnet, dass** gilt:
Z ist jeweils unabhängig voneinander ausgewählt aus der Gruppe bestehend aus zweiwertigen aliphatischen Kohlenwasserstoffresten mit 2 bis 20, bevorzugt 2 bis 3, besonders bevorzugt 2 Kohlenstoffatomen;
R^{(Aryl)} ist jeweils unabhängig voneinander ausgewählt aus der Gruppe bestehend aus Resten gemäß der allgemeinen Formel 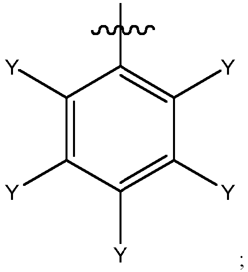
wobei gilt:
Y ist jeweils unabhängig voneinander ausgewählt aus der Gruppe bestehend aus H und einwertigen aliphatischen Kohlenwasserstoffresten mit 1 bis 20 Kohlenstoffatomen, bevorzugt H und/oder CH₃, besonders bevorzugt H.

3. Verwendung nach mindestens einem der Ansprüche 1 bis 2, **dadurch gekennzeichnet, dass** das Organosiloxan (I) mindestens einen Phenylrest aufweist, welcher über einen Rest -CH₂-CH₂- an ein Siliziumatom gebunden ist.

4. Verwendung nach mindestens einem der Ansprüche 1 bis 3, **dadurch gekennzeichnet, dass** die Reste R^{(Aryl)} über die Reste Z an mindestens 2%, bevorzugt 3% bis 50%, besonders bevorzugt 5% bis 40% der Siliziumatome des Organosiloxans (I) gebunden sind.

5. Verwendung nach mindestens einem der Ansprüche 1 bis 4, **dadurch gekennzeichnet, dass** Reste R^{(Aryl)} über Reste Z an den terminalen Siliziumatomen des Organosiloxans (I) gebunden sind.

6. Verwendung nach mindestens einem der Ansprüche 1 und 5, **dadurch gekennzeichnet, dass** das Organosiloxan (I) 10 bis 500, bevorzugt 15 bis 300, mehr bevorzugt 20 bis 200, besonders bevorzugt 30 bis 180 Siliziumatome aufweist.

7. Verwendung nach mindestens einem der Ansprüche 1 bis 6, **dadurch gekennzeichnet, dass** das Organosiloxan (II) 50 bis 500, bevorzugt 55 bis 300, mehr bevorzugt 60 bis 200, besonders bevorzugt 60 bis 180 Siliziumatome aufweist.

8. Verwendung nach mindestens einem der Ansprüche 1 bis 7, **dadurch gekennzeichnet, dass** 0,4 bis 10%, bevorzugt 0,6 bis 8%, mehr bevorzugt 0,8 bis 7 % der Siliziumatome des Organosiloxans (II) ethylenisch ungesättigte, radikalisch polymerisierbare Gruppen tragen, wobei ein Siliziumatom ein, zwei oder drei solcher Gruppen tragen kann.

9. Verwendung nach mindestens einem der Ansprüche 1 bis 8, **dadurch gekennzeichnet, dass** die ethylenisch ungesättigten, radikalisch polymerisierbaren Gruppen ausgewählt sind aus der Gruppe bestehend aus Methacrylsäurestergruppen und Acrylsäureestergruppen, noch weiter bevorzugt Acrylsäurestergruppen.

10. Verwendung nach mindestens einem der Ansprüche 1 bis 9, wobei die Zusammensetzungen zusätzlich Komponenten ausgewählt aus der Gruppe bestehend aus rein organischen phosphorhaltigen oder phosphorfreien Verbindungen, mit mindestens einer ethylenisch ungesättigten, radikalisch polymerisierbare Gruppe, ein von Organosiloxan (I) und Organosiloxan (II) unterschiedliches Organosiloxan (III) mit mindestens einer ethylenisch ungesättigten, radikalisch polymerisierbaren Gruppe, Photoinitiatoren, Photosensibilisatoren, Füllstoffen, Pigmenten, Lösemitteln, Härtungsbeschleunigern, Anti-Misting-Additiven, Amin-Synergisten und Stabilisatoren, wie beispielsweise Phosphiten oder hindered amine light stabilizers (HALS), Antioxidationsmitteln und Sauerstofffängern enthalten.

11. Verfahren zur Herstellung einer Trennbeschichtung enthaltend mindestens ein Organosiloxan (I) gemäß den Vorgaben aus mindestens einem der Ansprüche 1 bis 6, umfassend die mittelbar oder unmittelbar aufeinanderfolgenden Schritte:
a. Auftragen einer Zusammensetzung gemäß den Vorgaben aus mindestens einem der Ansprüche 1 bis 10 auf mindestens eine Oberfläche;
b. Bestrahlen der Zusammensetzung mit UV-Strahlung.

12. Trennbeschichtung erhältlich durch die Verwendung gemäß mindestens einem der Ansprüche 1 bis 10 und/oder durch das Verfahren gemäß Anspruch 11.

13. Trennbeschichtung erhältlich durch Aushärtung einer Zusammensetzung gemäß den Vorgaben aus mindestens einem der Ansprüche 1 bis 10, vorzugsweise mittels Bestrahlens der Zusammensetzung, insbesondere mittels Bestrahlens der Zusammensetzung mit UV-Strahlung.

## Claims

1. Use of compositions comprising the components (I) and (II), where component (I) is at least one organosiloxane (I) which has at least one aromatic radical R^{(aryl)} which is bonded via a non-aromatic organic radical Z to a silicon atom, and component (II) is at least one organosiloxane (II) which is different from organosiloxane (I) and which has at least one ethylenically unsaturated, radically polymerizable group, as radiation-curing coating materials, **characterized in that** the cured coating material is a release coating.

2. Use according to Claim **1, characterized in that**:
Z in each case independently of any other is selected from the group consisting of divalent aliphatic hydrocarbon radicals having 2 to 20, preferably 2 to **3,** more preferably 2 carbon atoms;
R^{(aryl)} in each case independently of any other is selected from the group consisting of radicals according to the general formula 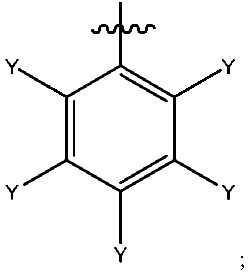
where:
Y in each case independently of any other is selected from the group consisting of H and monovalent aliphatic hydrocarbon radicals having 1 to 20 carbon atoms, preferably H and/or CH₃, more preferably H.

3. Use according to at least one of Claims 1 to 2, **characterized in that** the organosiloxane (I) has at least one phenyl radical which is bonded via a radical -CH₂-CH₂-to a silicon atom.

4. Use according to at least one of Claims 1 to 3, **characterized in that** the radicals R^{(aryl)} are bonded via the radicals Z to at least 2%, preferably 3% to 50%, more preferably 5% to 40% of the silicon atoms of the organosiloxane (I).

5. Use according to at least one of Claims 1 to 4, **characterized in that** radicals R^{(aryl)} are bonded via radicals Z to the terminal silicon atoms of the organosiloxane (I).

6. Use according to at least one of Claims 1 and 5, **characterized in that** the organosiloxane (I) has 10 to 500, preferably 15 to 300, more preferably 20 to 200, very preferably 30 to 180 silicon atoms.

7. Use according to at least one of Claims 1 to 6, **characterized in that** the organosiloxane (II) has 50 to 500, preferably 55 to 300, more preferably 60 to 200, very preferably 60 to 180 silicon atoms.

8. Use according to at least one of Claims 1 to 7, **characterized in that** 0.4 to 10%, preferably 0.6 to 8%, more preferably 0.8 to 7% of the silicon atoms of the organosiloxane (II) carry ethylenically unsaturated, radically polymerizable groups, where one silicon atom may carry one, two or three such groups.

9. Use according to at least one of Claims 1 to 8, **characterized in that** the ethylenically unsaturated, radically polymerizable groups are selected from the group consisting of methacrylic ester groups and acrylic ester groups, more preferably acrylic ester groups.

10. Use according to at least one of Claims 1 to 9, wherein the compositions further comprise components selected from the group consisting of purely organic, phosphorus-containing or phosphorus-free compounds having at least one ethylenically unsaturated, radically polymerizable group, an organosiloxane (III) which is different from organosiloxane (I) and organosiloxane (II) and which has at least one ethylenically unsaturated, radically polymerizable group, photoinitiators, photosensitizers, fillers, pigments, solvents, curing accelerators, anti-misting additives, amine synergists and stabilizers, such as, for example, phosphites or hindered amine light stabilizers (HALS), antioxidants and oxygen scavengers.

11. Method for producing a release coating comprising at least one organosiloxane (I) according to the specifications of at least one of Claims 1 to 6, comprising the indirectly or directly successive steps of:
a. applying a composition according to the specifications of at least one of Claims 1 to 10 to at least one surface;
b. irradiating the composition with UV radiation.

12. Release coating obtainable by the use according to at least one of Claims 1 to 10 and/or by the method according to Claim 11.

13. Release coating obtainable by curing a composition according to the specifications of at least one of Claims 1 to 10, preferably via irradiation of the composition, more particularly via irradiation of the composition with UV radiation.

## Revendications

1. Utilisation de compositions contenant les composants (I) et (II), le composant (I) étant au moins un organosiloxane (I) qui comporte au moins un radical aromatique R^{(aryle)} qui est lié à un atome de silicium par l'intermédiaire d'un radical organique non aromatique Z, et le composant (II) étant au moins un organosiloxane (II) différent de l'organosiloxane (I), comportant au moins un groupe à insaturation éthylénique, polymérisable par voie radicalaire, en tant que matières de revêtement durcissant sous l'effet d'un rayonnement, **caractérisée en ce que** la matière de revêtement durcie est un revêtement antiadhésif.

2. Utilisation selon la revendication 1, **caractérisé en ce qu'**il s'applique que :
Z est choisi chaque fois indépendamment dans le groupe constitué par les radicaux hydrocarbonés aliphatiques divalents ayant de 2 à 20, de préférence 2 ou 3, de façon particulièrement préférée 2 atomes de carbone ;
R^{(aryle)} est choisi chaque fois indépendamment dans le groupe constitué par les radicaux selon la formule générale 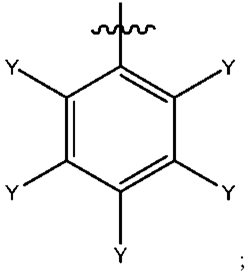
dans laquelle il s'applique que :
Y est choisi chaque fois indépendamment dans le groupe constitué par H et les radicaux hydrocarbonés aliphatiques monovalents ayant de 1 à 20 atomes de carbone, de préférence H et/ou CH₃, de façon particulièrement préférée H.

3. Utilisation selon au moins l'une des revendications 1 et 2, **caractérisée en ce que** l'organosiloxane (I) comporte au moins un radical phényle qui est lié à un atome de silicium par l'intermédiaire d'un radical -CH₂-CH₂-.

4. Utilisation selon au moins l'une des revendications 1 à 3, **caractérisée en ce que** les radicaux R^{(aryle)} sont liés par l'intermédiaire des radicaux Z à au moins 2 %, de préférence 3 % à 50 %, de façon particulièrement préférée 5 % à 40 % des atomes de silicium de l'organosiloxane (I).

5. Utilisation selon au moins l'une des revendications 1 à 4, **caractérisée en ce que** les radicaux R^{(aryle)} sont liés par l'intermédiaire des radicaux Z aux atomes de silicium terminaux de l'organosiloxane (I).

6. Utilisation selon au moins l'une des revendications 1 et 5, **caractérisée en ce que** l'organosiloxane (I) comporte 10 à 500, de préférence 15 à 300, plus préférablement 20 à 200, de façon particulièrement préférée 30 à 180 atomes de silicium.

7. Utilisation selon au moins l'une des revendications 1 et 6, **caractérisée en ce que** l'organosiloxane (II) comporte 50 à 500, de préférence 55 à 300, plus préférablement 60 à 200, de façon particulièrement préférée 60 à 180 atomes de silicium.

8. Utilisation selon au moins l'une des revendications 1 à 7, **caractérisée en ce que** 0,4 à 10 %, de préférence 0,6 à 8 %, plus préférablement 0,8 à 7 % des atomes de silicium de l'organosiloxane (II) portent des groupes à insaturation éthylénique, polymérisables par voie radicalaire, un atome de silicium pouvant porter un, deux ou trois de tels groupes.

9. Utilisation selon au moins l'une des revendications 1 à 8, **caractérisée en ce que** les groupes à insaturation éthylénique, polymérisables par voie radicalaire, sont choisis dans le groupe constitué par les groupes ester d'acide méthacrylique et les groupes ester d'acide acrylique, encore plus préférablement les groupes ester d'acide acrylique.

10. Utilisation selon au moins l'une des revendications 1 à 9, dans laquelle les compositions contiennent en outre des composants choisis dans le groupe constitué par des composés organiques purs contenant du phosphore ou exempts de phosphore, comportant au moins un groupe à insaturation éthylénique, polymérisable par voie radicalaire, un organosiloxane (III) différent de l'organosiloxane (I) et de l'organosiloxane (II), comportant au moins un groupe à insaturation éthylénique, polymérisable par voie radicalaire, polymérisable par voie radicalaire, des photoamorceurs, des photosensibilisants, des charges, des pigments, des solvants, des accélérateurs de durcissement, des additifs anti-nébulisation, des synergistes de type amine et des stabilisants, comme par exemple des phosphites ou des photostabilisants à amine encombrée (HALS), des antioxydants et des piègeurs d'oxygène.

11. Procédé de préparation d'un revêtement antiadhésif contenant au moins un organosiloxane (I) selon les spécifications d'au moins une des revendications 1 à 6, comprenant les étapes - successives, avec ou sans intermédiaire :
a. application d'une composition selon les spécifications d'au moins une des revendications 1 à 10 sur au moins une surface ;
b. irradiation de la composition avec un rayonnement UV.

12. Revêtement antiadhésif pouvant être obtenu par l'utilisation selon au moins l'une des revendications 1 à 10 et/ou par le procédé selon la revendication 11.

13. Revêtement antiadhésif pouvant être obtenu par durcissement d'une composition selon les spécifications d'au moins l'une des revendications 1 à 10, de préférence par irradiation de la composition, en particulier par irradiation de la composition avec un rayonnement UV.
